# EUROPÄISCHE PATENTSCHRIFT

(11) **EP 3 642 562 B1**
(45) Veröffentlichungstag und Bekanntmachung des Hinweises auf die Patenterteilung: **16.03.2022**
(21) Anmeldenummer: 18733597.1
(22) Anmeldetag: 22.06.2018
(51) Int. Cl.: G01B 21/04, G01Q 40/02

(54) **KALIBRIERNORMAL UND VERFAHREN ZU SEINER HERSTELLUNG**
CALIBRATION STANDARD AND METHOD FOR THE PRODUCTION THEREOF
RÉFÉRENCE D'ÉTALONNAGE ET PROCÉDÉ DE PRODUCTION CORRESPONDANT

(30) Priorität: 22.06.2017 DE 102017113897
(43) Veröffentlichungstag der Anmeldung: 29.04.2020
(73) Patentinhaber: Fraunhofer-Gesellschaft zur Förderung der angewandten Forschung e.V., 80686 München (DE); Technische Universität Kaiserslautern, 67663 Kaiserslautern (DE)
(72) Erfinder: VON FREYMANN, Georg, 67657 Kaiserslautern (DE); EIFLER, Matthias, 67663 Kaiserslautern (DE); HERING, Julian, 67433 Neustadt/Weinstr. (DE); SEEWIG, Jörg, 30359 Hannover (DE)
(74) Vertreter: WSL Patentanwälte Partnerschaft mbB
(86) Internationale Anmeldenummer: PCT/EP2018/066805
(87) Internationale Veröffentlichungsnummer: WO 2018/234558

(56) Entgegenhaltungen:
- JP-A- H08 285 502
- US-A1- 2013 188 035
- US-B1- 7 788 818
- US-B2- 6 704 102
- Pyser-Sgi: "Stage micrometers calibration standards", The Kent and Sussex Courier, 17. September 2010 (2010-09-17), XP055501027, Tunbridge Wells (UK) Gefunden im Internet: URL:http://www.pyseroptics.com/wp-content/ uploads/2017/07/111.pdf [gefunden am 2018-08-21]

## Beschreibung

Die vorliegende Erfindung betrifft ein Kalibriernormal zum Kalibrieren eines Tastschnittmessgerätes oder eines optischen Messgerätes mit einem Trägersubstrat und einer auf das Trägersubstrat aufgebrachten ersten Kalibrierstruktur, wobei die erste Kalibrierstruktur eine erste Topographie aufweist, die derart ausgestaltet und auf dem Trägersubstrat angeordnet ist, dass sie eine Kalibrierung einer ersten metrologischen Eigenschaft des Messgerätes ermöglicht.

Darüber hinaus betrifft die vorliegende Erfindung ein Verfahren zur Herstellung eines Kalibriernormals zum Kalibrieren eines Tastschnittmessgerätes oder eines optischen Messgerätes mit den Schritten Aufbringen einer ersten Kalibrierstruktur mit einer Topographie für die Kalibrierung einer ersten metrologischen Eigenschaft des Messgerätes auf ein Trägersubstrat.

Derartige Kalibriernormale zum Kalibrieren von Tastschnittmessgeräten oder optischen Messgeräten sind aus dem Stand der Technik bekannt. Die genannten Messgeräte dienen dazu eine geometrische Produktspezifikation (GPS), d.h. die Oberflächentopographie, eines Werkstücks oder einer Probe zu ermitteln. Zu der Beschreibung der Topographie des Werkstücks oder der Probe gehört die Beschreibung der gesamten Oberflächengestalt einschließlich der Rauheit. Bei der Erfassung der Topographie mit mechanischen Messgeräten, sogenannten Tastschnittgeräten, wird eine Tastspitze aus Diamant mit konstanter Geschwindigkeit über die Oberfläche der Probe bzw. des Werkstückes verfahren. Ein Tastschnittverfahren, bei dem ein mechanisches Tastschnittgerät zum Einsatz kommt, ist somit immer ein invasiver Vorgang, bei dem das Messgerät die Probe direkt berührt. Hingegen sind optische Messgeräte und deren Verfahren nicht invasiv, da sie die Probe bzw. das Werkstück unberührt lassen. Als optische Messgeräte werden z.B. Laserprofilometer oder Weißlichtinterferometer benutzt.

Um mit diesen Messgeräten verlässliche Messdaten generieren zu können, werden Kalibriernormale genutzt, welche definierte Eigenschaften an Messgeräte zum Zwecke der Ermittlung von gerätespezifischen Abweichungen weitergeben. Diese Kalibriernormale sind in den Normen DIN EN ISO 5436-1 für Tastschnittgeräte, sowie in DIN EN ISO 25178-70 allgemein für Messgeräte zur Bestimmung von Oberflächentopographien standardisiert.

Zur vollumfänglichen Kalibrierung von Messgeräten zur geometrischen Produktspezifikation ist es erforderlich, verschiedene metrologische Messgeräte-Eigenschaften zu untersuchen. Hierfür sind die Merkmale der verschiedenen, zurzeit verwendeten, Messgeräte zur Bestimmung von Oberflächentopographien in der Normenserie DIN EN ISO 25178-60X definiert, wobei X nach dem aktuellen Stand der Technik einer Zahl zwischen 1 bis 6 entspricht. So sind zum Beispiel in der DIN EN ISO 25178-601 die Merkmale von berührend messenden Geräten (mit Taster) und in der DIN EN ISO 25178-604 die Merkmale von berührungslos messenden Geräten, speziell von Weißlichtinterferometern, aufgeführt.

In den genannten Normen DIN EN ISO 5436-1 und DIN EN ISO 25178-70 sind unter anderem Kalibriernormale oder auch Maßverkörperungen definiert, um eine Kalibrierung der vertikalen und horizontalen Profilkomponenten vornehmen zu können. In der DIN EN ISO 5436-1 für Tastschnittgeräte werden z.B. Tiefeneinstellnormale, Normale zur Kalibrierung des Zustands der Tastspitze, Rillenabstandsnormale, Raunormale und Normale zur Messung des Profilkoordinatensystems definiert. Einen ähnlichen Satz an Normalen, bzw. hier Maßverkörperungen genannt, findet sich ebenfalls in der DIN EN ISO 25178-70 für flächenhaft messende Messgeräte zur Bestimmung von Oberflächentopographien.

Bisher werden die unterschiedlichen metrologischen Messgeräte-Eigenschaften von Tastschnittmessgeräten oder optischen Messgeräten auf der Basis einzelner voneinander getrennter Normale ermittelt. So werden z.B. die horizontalen bzw. lateralen Achsen dieser Messgeräte mit periodischen Gittern kalibriert, die vertikale Achse bzw. Höhenachse wird mit Rillen bzw. sogenannten Tiefeneinstellnormalen kalibriert und Raunormale dienen zur Kalibrierung des gesamten Messgeräte-Zustands auf Basis von genormten Rauheitskenngrößen für den 2D-oder auch 3D-Bereich.

Nach dem derzeitigen Stand der Technik wird für die ganzheitliche Kalibrierung optischer Messgeräte ein Konzept beruhend auf der Basis eines Satzes von einzelnen, getrennten Normalen genutzt.

Problematisch bei einer nach dem derzeitigen Stand der Technik ausgeführten Kalibrierung von Tastschnittmessgeräten oder optischen Messgeräten ist der hohe Zeitaufwand, der für eine vollumfängliche Kalibrierung erforderlich und für industrielle Anwendungen nicht vertretbar ist. Dies hängt mit der Vielzahl von Messgeräte-Eigenschaften, insbesondere bei 3D-Messgeräten zusammen, die für jede der Messgeräte-Achsen einzeln überprüft werden müssen. Hierzu muss auch jedes Mal ein separates Normal genutzt werden, welches in der Regel nur eine oder zwei der untersuchten Eigenschaften abbildet. Für eine vollumfängliche Kalibrierung müssen demnach nacheinander zum Teil viele verschiedene Normale in das Messgerät eingelegt, gemessen und ausgewertet werden. Der Vorgang einer solchen Kalibrierung kann schnell einige Stunden in Anspruch nehmen. Die Kalibrierung von Tastschnittmessgeräten oder optischen Messgeräten muss darüber hinaus in regelmäßigen Abständen, teilweise sogar täglich oder bei jedem Schichtwechsel in einem Messraum, erfolgen.

Aus der US 6,704,102 B2 ist ein Kalibriernormal und ein Verfahren zum Kalibrieren eines Systems zum maschinellen Sehen bekannt. Das Kalibriernormal umfasst ein Substrat und eine Anzahl von konzentrischen Ringen auf einer Oberfläche des Substrats. Jeder Ring hat eine andere vorgegebene Größe. Die Änderung in der Größe zwischen irgendwelchen zwei benachbarten Ringen ist verschieden von der Änderung der Größe zweier anderer einander benachbarter Ringe.

Aus der US 7,788,818 B1 ist ein Mittelskalenkalibriernormal, auch als Hybridnormal bezeichnet, bekannt. Dieses ist geeignet zum Ausführen von Messungen mittlerer Dimensionen. Das Hybridnormal hat eine strukturelle Eigenschaft, die es geeignet macht zur Vermessung von Dimensionen sowohl in auf optischen Systemen als auch von Tastschnittmessgeräten. Das Hybridnormal verwendet den Schnitt von aus dem vollen gearbeiteten mircobearbeiteten Ebenen, die Ebenen mit Kristallgitter definierten Winkeln schneiden, um Kanten herzustellen, die auf der Nanometerskala scharf sind.

Aus der JP 408285502 A ist ein Kalibriernormal mit einem Metallsubstrat und einem Miniaturkalibriermuster, das auf der Oberfläche des Metallsubstrats gebildet ist, bekannt. Dabei sind Gänge, die Stufen aufweisen, die periodisch in vorbestimmten Abständen von 1 µm oder weniger angeordnet sind, und Positionsanzeigemuster, die auf dem Metallsubstrat in solchen Abmessungen gezeichnet sind, sodass sie mit dem bloßen Auge sichtbar sind, um die Position des Miniaturkalibriermusters anzuzeigen, vorgesehen.

Aus der US 2013/0188035 A1 ist ferner eine Kalibriervorrichtung für optische Mikroskope bekannt, die mit einem optischen Mikroskop verwendet werden kann, um die Bildgebungsparameter des Mikroskops einzustellen, sodass Bilder von Proben unterhalb der Beugungsbegrenzung erhalten werden können. Die Mikroskopkalibriervorrichtung umfasst mindestens ein Kalibriernormal. Jedes Kalibriernormal umfasst eine Anzahl von Merkmalen mit Abmessungen, die kleiner sind als die Beugungsbegrenzung eines Mikroskopobjektivs. Getrennte beugungsbegrenzte Farbkomponentenbilder eines der Kalibriernormale werden für bestimmte Vergrößerungen erhalten. Die Farbkomponentenbilder können gemeinsam verarbeitet werden, um ein fokussiertes und nicht verzerrtes Bild des Kalibriernormals zu erhalten. Die zum Erhalten des fokussierten und nicht verzerrten Bildes des Kalibriernormals verwendeten Parameter können verwendet werden, um fokussierte und nicht verzerrte Bilder einer Probe für die gleiche Vergrößerung zu erhalten, wenn die gleichen Parameter verwendet werden.

Es ist ein Aspekt der vorliegenden Erfindung ein Kalibriernormal und ein Verfahren zur Herstellung eines Kalibriernormals bereitzustellen, welche mit einem einzigen Kalibriernormal ein ganzheitliches Kalibrieren eines Tastschnittmessgerätes oder eines optischen Messgerätes ermöglicht.

Daher wird erfindungsgemäß ein Kalibriernormal der eingangs genannten Art vorgeschlagen, wobei das Kalibriernormal weiterhin mindestens eine auf das Trägersubstrat aufgebrachte zweite Kalibrierstruktur aufweist, wobei die zweite Kalibrierstruktur eine zweite Topographie aufweist, die derart ausgestaltet und auf dem Trägersubstrat angeordnet ist, dass sie eine Kalibrierung einer zweiten metrologischen Eigenschaft des Messgerätes ermöglicht, wobei die erste Topographie und die zweite Topographie voneinander verschieden sind, wobei die zu erfassende Fläche der ersten Kalibrierstruktur und die zu erfassende Fläche der zweiten Kalibrierstruktur jeweils eine Fläche des Trägersubstrats mit einer maximalen charakteristischen Abmessung von 800 µm oder weniger bedecken, wobei die erste Kalibrierstruktur und die zweite Kalibrierstruktur durch ein additives Fertigungsverfahren, nämlich mittels 3D-Druck, auf dem Trägersubstrat hergestellt sind, wobei die erste Kalibrierstruktur und die zweite Kalibrierstruktur jeweils eine Topographie mit einer maximalen Strukturtiefe von 100 µm oder weniger und einer maximale Strukturbreite von 100 µm oder weniger aufweisen und wobei die erste Kalibrierstruktur und die zweite Kalibrierstruktur eine Oberflächenbeschichtung aus einem Metall aufweisen.

Die der Erfindung zugrundeliegende Idee ist es, durch das Aufbringen einer Mehrzahl von voneinander verschiedenen und unabhängigen Kalibrierstrukturen auf nur einem einzigen Trägersubstrat eine ganzheitliche Kalibrierung von Tastschnittmessgeräten oder optischen Messgeräten zu ermöglichen. Auf der Basis der Erfindung kann dann ein einziges Normal genutzt werden, welches alle metrologischen Eigenschaften im Rahmen einer Kalibrierung abdeckt. Somit ist kein Wechsel des Normals während des Kalibrierprozesses mehr erforderlich, wodurch ein deutlicher Zeitgewinn und eine Reduzierung des Aufwands erzielt werden.

Es versteht sich, dass das erfindungsgemäß vorgeschlagene Kalibriernormal sowohl für Tastschnittgeräte als auch für optische Messgeräte genutzt werden kann. Vorzugsweise wird es jedoch für die Kalibrierung von optischen Messgeräten, insbesondere von optischen Topographie-Messgeräten, genutzt.

In einer Ausführungsform ist das Kalibriernormal darüber hinaus in einem Träger montiert, der ein einfaches Hantieren ohne direkten Kontakt mit den Kalibrierstrukturen erlaubt, um die Kalibrierstrukturen vor äußeren Einflüssen und damit vor Beschädigungen zu schützen.

Es versteht sich darüber hinaus, dass die erfindungsgemäßen Kalibriernormale in einer Ausführungsform so viele Kalibrierstrukturen aufweisen, wie diese für eine ganzheitliche Kalibrierung eines Tastschnittmessgerätes oder eines optischen Messgerätes und dessen Messgeräte-Eigenschaften benötigt werden.

Die erste Kalibrierstruktur und die zweite Kalibrierstruktur sind durch ein additives Fertigungsverfahren auf dem Trägersubstrat hergestellt.

Dabei sind die erste Kalibrierstruktur und die zweite Kalibrierstruktur mittels 3D-Druck, vorzugsweise durch Einphotonenpolymerisation mittels Graustufenlithographie oder durch Mehrphotonenpolymerisation, insbesondere durch Zweiphotonenpolymerisation, mittels direktem Laserschreiben, hergestellt.

Die zu erfassende Fläche der ersten Kalibrierstruktur und die zu erfassende Fläche der zweiten Kalibrierstruktur bedecken jeweils eine Fläche des Trägersubstrats mit einer maximalen charakteristischen Abmessung von 800 µm oder weniger.

Die zu erfassende Fläche einer Kalibrierstruktur ist diejenige Fläche, die während einer Kalibrierung von dem Messgerät optisch oder mechanisch erfasst wird. Diese zu erfassende Fläche kann gleich groß wie die Grundfläche der Kalibrierstruktur oder auch kleiner als die Grundfläche sein.

Dabei ist die charakteristische Abmessung bei einer rechteckigen zu erfassenden Fläche die Kantenlänge und bei einer kreisförmigen zu erfassenden Fläche der Durchmesser.

Die Verwendung unterschiedlicher charakteristischer Abmessungen besitzt den Vorteil, dass man die Gesichtsfelder voneinander verschiedener industrieller 3D- Messgeräte zur Bestimmung von Oberflächentopographien und deren korrespondierenden Vergrößerungen abdecken kann. Somit kann jeweils ein Kalibriernormal für jeweils eine Vergrößerung bereitgestellt werden. Anders ausgedrückt werden z.B. auf einem ersten Trägersubstrat Kalibrierstrukturen mit einer ersten charakteristischen Abmessung aufgebracht, um eine erste Vergrößerung abzudecken und auf einem zweiten Trägersubstrat Kalibrierstrukturen mit einer zweiten charakteristischen Abmessung aufgebracht, um eine zweite Vergrößerung abzudecken. Die Obergrenze von 800 µm berücksichtigt zusätzlich die kleinsten Vergrößerungen, die derzeit mit typischen 3D- Messgeräten genutzt werden. Die Grundflächen der Kalibrierstrukturen, insbesondere aber die zu erfassenden Flächen der Kalibrierstrukturen können z.B. rechteckig, quadratisch, kreisrund, elliptisch, trapezförmig, dreieckig oder andere Flächen einnehmen.

Die erste Kalibrierstruktur und die zweite Kalibrierstruktur weisen jeweils eine Topographie mit einer maximalen Strukturtiefe von 100 µm oder weniger und einer maximalen Strukturbreite von 100 µm oder weniger auf.

Es versteht sich, dass die Topographie der Kalibrierstrukturen identische maximale Strukturtiefen und Strukturbreiten aufweisen können. Die Kalibrierstrukturen können jedoch auch Topographien aufweisen, bei denen die maximalen Strukturtiefen und maximalen Strukturbreiten der Kalibrierstrukturen voneinander verschieden sind. Um die Tastschnittmessgeräte oder die optischen Messgeräte zu kalibrieren, die dafür geeignet sind Strukturgrößen bis in den Nanometerbereich zu erfassen, sind jedoch Obergrenzen von maximaler Strukturtiefe und maximaler Strukturbreite von maximal jeweils 100 µm vorgesehen.

Es versteht sich außerdem, dass die genannten Strukturen beliebige geometrische Formen besitzen können z.B. Rechtecke, Dreiecke, Sinus, Kreisbögen, usw. Es kann sich bei diesen Strukturen auch um Rillen handeln, wobei die Strukturen in diesem Fall eine maximale Rillentiefe von 100 µm oder weniger und eine maximale Rillenbreite von 100 µm oder weniger aufweisen.

Dabei ist die Strukturtiefe durch den Abstand vom höchsten Punkt der Topographie bis zum tiefsten Punkt der Topographie gegeben. Die Strukturbreiten sind als Abstand der senkrechten Wände der Wände einzelner Strukturen zu verstehen.

In einer weiteren Ausführungsform der Erfindung sind die erste Kalibrierstruktur und die zweite Kalibrierstruktur räumlich voneinander beabstandet auf dem Trägersubstrat angeordnet.

Die räumliche Beabstandung der Kalibrierstrukturen auf dem Trägersubstrat vereinfacht das Kalibrieren von Tastschnittmessgeräten oder optischen Messgeräten dadurch, dass die einzelnen Kalibrierstrukturen durch ihre Beabstandung klar voneinander abgegrenzt sind.

In einer weiteren Ausführungsform der Erfindung bilden die erste Kalibrierstruktur und die zweite Kalibrierstruktur Teil eines ersten Satzes von Kalibrierstrukturen, wobei alle Kalibrierstrukturen des ersten Satzes von Kalibrierstrukturen eine zu erfassende Fläche mit einer ersten charakteristische Abmessung aufweisen und wobei auf dem Trägersubstrat ein zweiter Satz von Kalibrierstrukturen mit einer Mehrzahl von Kalibrierstrukturen angeordnet ist, wobei alle Kalibrierstrukturen des zweiten Satzes von Kalibrierstrukturen eine zu erfassende Fläche mit einer zweiten charakteristischenAbmessung aufweisen, wobei die erste und die zweite charakteristische Abmessung voneinander verschieden sind.

Durch die Verwendung von unterschiedlichen Flächeninhalten von unterschiedlichen Sätzen von Kalibrierstrukturen auf einem einzigen Kalibriernormal können mit einem einzigen Kalibriernormal unterschiedliche Vergrößerungen von optischen Messgeräten kalibriert werden. Hierzu werden auf einem einzelnen Trägersubstrat Kalibrierstrukturen mit unterschiedlichen charakteristischen Abmessungen aufgebracht.

In einer dazu alternativen Ausführungsform weist die erste Topographie der ersten Kalibrierstruktur Strukturtiefen und Strukturbreiten auf, welche dazu ausgestaltet sind, ein Messgerät mit einer ersten Auflösung und ein Messgerät mit einer zweiten Auflösung zu kalibrieren, und die zweite Topographie der zweiten Kalibrierstruktur weist Strukturtiefen und Strukturbreiten auf, welche dazu ausgestaltet sind, ein Messgerät mit der ersten Auflösung und ein Messgerät mit der zweiten Auflösung zu kalibrieren. Auf diese Weise ist es entbehrlich, zur Kalibrierung zweier verschiedener Auflösungen eines einzigen Messgeräts oder zweier Messgeräte mit verschiedener Auflösung zwei verschiedene Sätze von Kalibrierstrukturen mit den jeweils gleichen Strukturformen, aber mit verschiedenen Strukturtiefen und -breiten bereitzustellen. In einer Ausführungsform sind die Strukturen mit voneinander verschiedenen Strukturtiefen und Strukturbreiten in einer einzelnen Kalibrierstruktur einander räumlich überlagert. Ein Beispiel hierfür ist ein quadratisches Gitter, in dessen Quadranten jeweils ein feineres Gitter eingeschrieben ist.

In einer weiteren Ausführungsform der Erfindung sind die Kalibrierstrukturen quadratisch und die Kantenlängen der Kalibrierstrukturen des ersten und zweiten Satzes von Kalibrierstrukturen sind voneinander verschieden.

Mit dieser Ausführungsform wird zusätzlich berücksichtigt, dass die Größen bzw. Kantenlängen der einzelnen Kalibrierstrukturen auf die Vergrößerung der Objektive der zu kalibrierenden optischen Messgeräte angepasst sein müssen. So korrespondieren quadratische Kalibrierstrukturen mit einer Kantenlänge von 100 µm mit den Vergrößerungen 60-fach und 100-fach, die größeren Strukturen sind entsprechend für geringere Vergrößerungen, z.B. 50-fach, 20-fach, 10-fach oder 5-fach gedacht.

In einer weiteren Ausführungsform ist das Trägersubstrat aus Glas hergestellt.

Die Verwendung von Glas als Trägersubstrat wird daher bevorzugt, da ein 3D-Druck durch Photopolymerisation für gewöhnlich mit einem Laser, der durch das Trägersubstrat in ein photosensitives

Material, d.h. einen Photolack, auch als Photoresist bezeichnet, fokussiert wird, erfolgt. Als Trägersubstrat könnte darüber hinaus jedoch auch jedes andere Material verwendet werden, das für das zum Schreiben verwendete Laserlicht transparent ist.

In einer weiteren Ausführungsform ist das Trägersubstrat ein Material, das opak gegenüber dem zum Schreiben verwendeten Laserlicht ist.

Bei der Verwendung eines opaken Trägersubstrats erfolgt der 3D-Druck in einem Auflichtverfahren. Hierbei wird der Laser direkt in den zu beschreibenden Photolack, ohne durchlaufen des Trägersubstrats, fokussiert, wobei das Trägersubstrat opak also optisch dicht oder Lichtundurchlässig für das Laserlicht ist.

In einer weiteren Ausführungsform der Erfindung sind die erste Kalibrierstruktur und die zweite Kalibrierstruktur aus einem Photolack, vorzugsweise aus einem Acrylat-basierten Photolack hergestellt.

Als Photolack wird ein auf einem Acrylat-basierender Photolack bevorzugt genutzt, um die Kalibrierstrukturen zu erzeugen. Hierzu wird ein Laserstrahl einer bestimmten Wellenlänge, dies kann zum Beispiel eine Wellenlänge im nahen Infrarotbereich sein, durch das Glassubstrat in den Photolack fokussiert. Hierbei wird das Material im Laserfokus polymerisiert. Durch ein Entwicklerbad bleiben nach diesem Prozess die mit dem Laser belichteten Bereiche als Mikro- und Nanostrukturen stehen.

Da die Kalibriermessungen in Reflexion erfolgen, werden Kalibrierstruktur und Glassubstrat zusätzlich mit einer reflektierenden Schicht beschichtet. Diese Beschichtung erfolgt für gewöhnlich durch Sputtern oder Aufdampfen von einem geeigneten Metall, z.B. Gold. Wichtig in diesem Zusammenhang ist, dass dieses Metall nicht transparent für das von einem zu kalibrierenden optischen Messgerätes abgestrahlten Lichts ist, sondern eine Reflexion stattfindet.

Entsprechend weisen die erste Kalibrierstruktur und die zweite Kalibrierstruktur eine Oberflächenbeschichtung aus einem Metall auf.

Eine zusätzliche Beschichtung der Oberfläche mit einer Schutzschicht kann z.B. durch Sputtern, thermisches Verdampfen oder mittels Atomlagendeposition erfolgen. Die Beschichtung erfolgt, um die Beständigkeit der Kalibrierstrukturen gegen Kratzer im Messbetrieb zu erhöhen. Diese Schutzschicht wird zusätzlich auf die reflektierende Schicht aufgebracht. Als widerstandsfähiges Material empfiehlt sich hier z.B. Al₂O₃. Das verwendete Material der Schutzschicht ist so beschaffen, dass es transparent für das Licht des zu kalibrierenden optischen Messgerätes ist, so dass das Licht des Messgerätes ausschließlich von der reflektierenden Schicht zurückreflektiert wird.

Darüber hinaus wird erfindungsgemäß auch ein Verfahren zur Herstellung eines Kalibriernormals zum Kalibrieren eines Tastschnittmessgerätes oder eines optischen Messgerätes der eingangs genannten Art vorgeschlagen, das darüber hinaus den Schritt aufweist: Aufbringen mindestens einer zweiten Kalibrierstruktur mit einer Topographie für die Kalibrierung einer zweiten metrologischen Eigenschaft des Messgerätes auf das Trägersubstrat, wobei die erste Topographie und die zweite Topographie voneinander verschieden sind, wobei die zu erfassende Fläche der ersten Kalibrierstruktur und die zu erfassende Fläche der zweiten Kalibrierstruktur jeweils eine Fläche des Trägersubstrats mit einer maximalen charakteristischen Abmessung von 800 µm oder weniger bedecken, wobei das Aufbringen der ersten und der zweiten Kalibrierstruktur durch ein additives Fertigungsverfahren, nämlich mittels 3D-Druck, auf dem Trägersubstrat erfolgt, die erste Kalibrierstruktur und die zweite Kalibrierstruktur jeweils eine Topographie mit einer maximalen Strukturtiefe von 100 µm oder weniger und einer maximalen Strukturbreite von 100 µm oder weniger aufweisen und wobei die erste Kalibrierstruktur und die zweite Kalibrierstruktur eine Oberflächenbeschichtung aus einem Metall aufweisen.

Dabei erfolgt das Aufbringen der ersten und der zweiten Kalibrierstruktur durch ein additives Fertigungsverfahren auf dem Trägersubstrat.

Dabei erfolgt das Aufbringen der ersten und der zweiten Kalibrierstruktur mittels 3D-Druck, vorzugsweise durch Einphotonenpolymerisation mittels Graustufenlithographie oder durch Mehrphotonenpolymerisation, insbesondere Zweiphotonenpolymerisation, mittels direktem Laserschreiben.

Zu den bevorzugten Verfahren des 3D-Drucks gehören verschiedene Arten der Laserlithographie mittels Zwei- oder Mehrphotonenabsorption, unter anderem die Dip-In-Laserlithographie, die Super-Resolution-Lithographie, sowie die Laserlithographie mit räumlichen Lichtmodulatoren. Hierdurch wird es möglich einen 3D-Druck auf Mikrometer- und Nanometerskalen (3D-µ-Druck) mit einer sehr großen Genauigkeit zu vollziehen.

Dabei erfolgt das Aufbringen der ersten und der zweiten Kalibrierstruktur mit jeweils einer zu erfassenden Fläche mit einer maximalen charakteristischen Abmessung von 800 µm oder weniger auf dem Trägersubstrat sowie mit jeweils einer Topographie mit einer maximalen Strukturtiefe von 100 µm oder weniger und einer maximalen Strukturbreite von 100 µm oder weniger.

Weitere Vorteile, Merkmale und Anwendungsmöglichkeiten der vorliegenden Erfindung werden anhand der folgenden Beschreibung von Ausführungsformen davon sowie der dazugehörigen Figuren deutlich.
Figur 1a ist eine schematische weggebrochene Draufsicht auf eine einzelne Kalibrierstruktur eines erfindungsgemäßen Kalibriernormals für ein Tastschnittmessgerät oder ein optisches Messgerät.
Figur 1b ist eine ausschnittsweise schematische Seitenansicht des erfindungsgemäßen Kalibriernormals aus Figur 1a.
Figur 2 ist eine vergrößerte schematische Seitenansicht eines Teilabschnittes der Kalibrierstruktur aus Figur 1a und 1b.
Figur 3 ist eine schematische Darstellung eines Verfahrens zur Herstellung von 3D-Mikrometer-Strukturen mittels 3D-Druck beruhend auf dem Prinzip der Zweiphotonenpolymerisation.
Figur 4 ist eine schematische Darstellung eines erfindungsgemäßen Kalibriernormals mit einer Mehrzahl von Kalibrierstrukturen.

In den Figuren sind gleiche Zeichen mit gleichen Bezugszeichen bezeichnet.

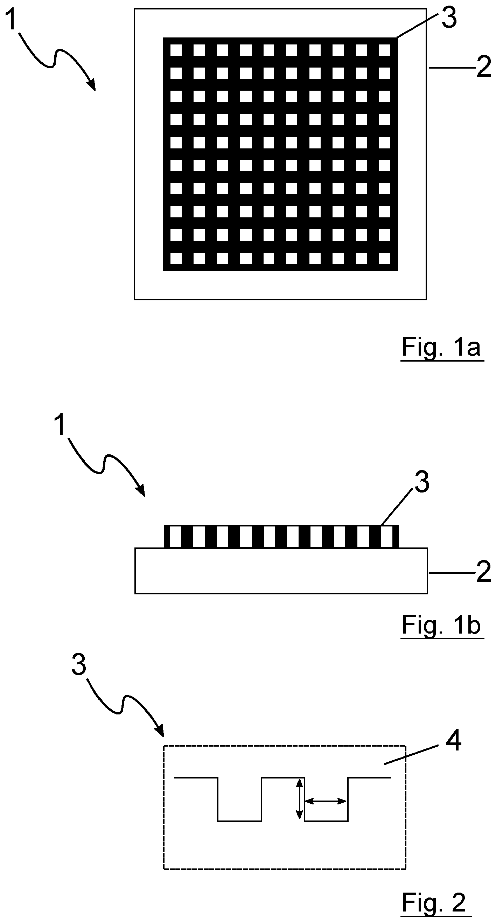

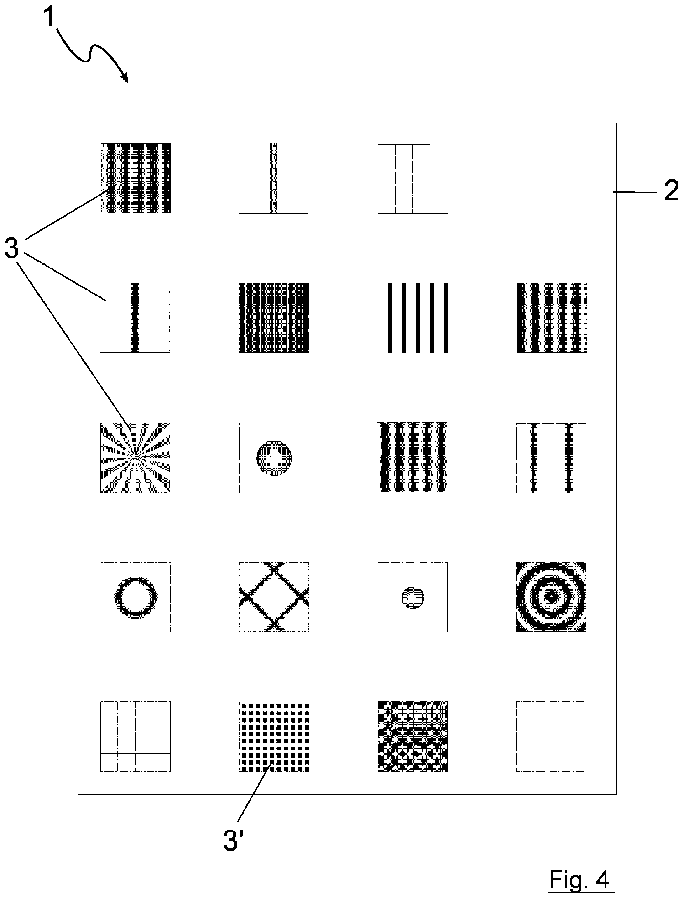

Figur 1a zeigt die schematische weggebrochene Draufsicht auf eine einzelne Kalibrierstruktur 3' eines erfindungsgemäßen Kalibriernormals 1 zum Kalibrieren eines Tastschnittmessgerätes oder eines optischen Messgerätes. Die einzelne Kalibrierstruktur 3' besetzt einen Teil des Trägersubstrats 2, hier eines Glassubstrates, des gesamten Kalibriernormals 1, wie es in Figur 4 dargestellt ist. Genauer ausgedrückt handelt es sich bei der einzelnen Kalibrierstruktur 3' um ein Kreuzgitter-Normal vom Typ ACG nach der Norm DIN EN ISO 25178-70. Dieses Kreuzgitter-Normal wird vorrangig für laterale Kalibrierungen verwendet wie z.B. Abstände und Gitterkonstanten.

Figur 1b zeigt die ausschnittsweise schematische Seitenansicht des erfindungsgemäßen Kalibriernormals 1 aus Figur 1a. Es zeigt das Kreuzgitter-Normal, das sich auf einem Trägersubstrat 2, hier auf einem Glassubstrat befindet.

Figur 2 zeigt die vergrößerte schematische Seitenansicht eines Teilabschnittes der Kalibrierstruktur 3' aus den Figuren 1a und 1b. Die Kalibrierstruktur 3' besitzt eine Topographie 4, die identische Strukturbreiten und identische Strukturtiefen aufweist. Die schematisch dargestellten Strukturbreiten und Strukturtiefen betragen maximal 100 µm. Es versteht sich, dass Kalibrierstrukturen 3 existieren, deren Topographien 4 unterschiedliche Strukturbreiten und Strukturtiefen aufweisen.

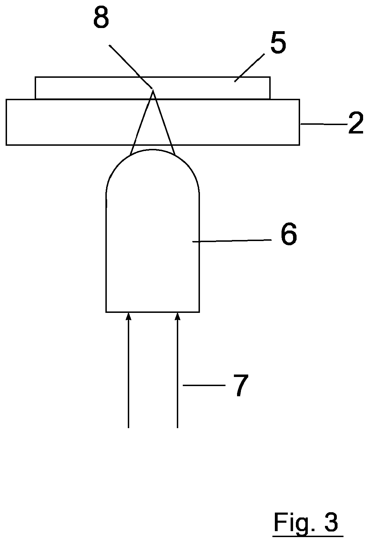

Figur 3 zeigt die schematische Darstellung eines Verfahrens zur Herstellung von 3D-Mikrometerstrukturen, genauer ein 3D-Druck-Messverfahren beruhend auf dem Prinzip der Zweiphotonenpolymerisation. Hierzu wird ein Laserstrahl 7 mit einer Wellenlänge im Bereich des Infraroten mit einem Objektiv 6 durch ein Trägersubstrat 2, hier durch ein Glassubstrat, in einen Acrylat-basierten Photolack 5 fokussiert. An dem Fokuspunkt des Laserstrahls 7 wird der Photolack 5 polymerisiert. Mit einem Piezoelement oder Galvanometerspiegeln, welche nicht dargestellt sind, können der Laserfokus und das Objektiv 6, oder alternativ das Trägersubstrat 2 zusammen mit dem Photolack 5 oder nur der Laserfokus so verfahren/ausgelenkt werden, dass der Photolack 5 an verschiedenen Stellen im Fokuspunkt des Lasers steht und somit polymerisiert wird. Man nennt dieses Verfahren auch direktes Laserschreiben, da an jedem Punkt des Photolacks 5, an dem der Laser fokussiert wurde, eine Information in den Photolack 5 in Form einer Polymerisation eingebracht wird. Ist der Prozess des Laserschreibens abgeschlossen, dann wird der beschriebene Photolack 5 auf dem Trägersubstrat 2 in ein Entwicklerbad gegeben, das ebenfalls nicht in der Zeichnung dargestellt ist, sodass im Anschluss an dieses Entwicklerbad lediglich die beschriebenen Stellen als freitragende Mikrometer und Nanometerstrukturen stehenbleiben. Der Photolack 5 wird im vorliegenden Falle so beschrieben, dass die freitragenden Mikrometer und Nanometerstrukturen eine Kalibrierstruktur 3 auf dem Trägersubstrat 2 bilden. Erfindungsgemäß wird das Laserschreiben ebenfalls eingesetzt, um eine Mehrzahl von Kalibrierstrukturen 3 auf einem einzigen Trägersubstrat 2 zu erzeugen.

Figur 4 zeigt die schematische Darstellung eines erfindungsgemäßen Kalibriernormals 1 in Draufsicht. Zu sehen ist eine Anzahl von 19 Kalibrierstrukturen 3, 3' die beabstandet voneinander auf einem Trägersubstrat 2 angeordnet sind. Die Kalibrierstrukturen 3, 3' nehmen quadratische Flächen mit einer Kantenlänge von jeweils 100 µm ein. Die Abstände zwischen den einzelnen Kalibrierstrukturen 3, 3' betragen ebenfalls etwa 100 µm. Da die Kantenlängen der einzelnen Kalibrierstrukturen 3, 3' im vorliegenden Fall jeweils identisch sind ist mit dem dargestellten Kalibriernormal 1 die Kalibrierung eines Tastschnittmessgerätes oder eines optischen Messgerätes mit einer Vergrößerung möglich. In der untersten Reihe des Kalibriernormals 1 an zweiter Stelle von links befindet sich als Kalibrierstruktur 3' das Kreuzgitter-Normal, das in den Figuren 1a, 1b und 2 in weggebrochener Form dargestellt ist.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vor vorangehenden Beschreibung dargestellt und beschrieben wurde, erfolgt diese Darstellung und Beschreibung lediglich beispielhaft und ist nicht als Beschränkung des Schutzbereichs gedacht, sowie er durch die Ansprüche definiert wird.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel in "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: Kalibriernormal
- 2: Trägersubstrat
- 3,3': Kalibrierstruktur
- 4: Topographie
- 5: Photolack
- 6: Objektiv
- 7: Laserstrahl
- 8: Laserfokus

## Patentansprüche

1. Kalibriernormal (1) zum Kalibrieren eines Tastschnittmessgerätes oder eines optischen Messgerätes mit
einem Trägersubstrat (2) und
einer auf das Trägersubstrat (2) aufgebrachten ersten Kalibrierstruktur (3), wobei die erste Kalibrierstruktur (3) eine erste Topographie (4) aufweist, die derart ausgestaltet und auf dem Trägersubstrat (2) angeordnet ist, dass sie eine Kalibrierung einer ersten metrologischen Eigenschaft des Messgerätes ermöglicht,
wobei das Kalibriernormal (1) weiterhin mindestens eine auf das Trägersubstrat (2) aufgebrachte zweite Kalibrierstruktur (3) aufweist, wobei die zweite Kalibrierstruktur (3) eine zweite Topographie (4) aufweist, die derart ausgestaltet und auf dem Trägersubstrat (2) angeordnet ist, dass sie eine Kalibrierung einer zweiten metrologischen Eigenschaft des Messgerätes ermöglicht, wobei die erste Topographie (4) und die zweite Topographie (4) voneinander verschieden sind,
wobei die zu erfassende Fläche der ersten Kalibrierstruktur (3) und die zu erfassende Fläche der zweiten Kalibrierstruktur (3) jeweils eine Fläche des Trägersubstrats (2) mit einer maximalen charakteristischen Abmessung von 800 µm oder weniger bedecken,
wobei die erste Kalibrierstruktur (3) und die zweite Kalibrierstruktur (3) jeweils eine Topographie (4) mit einer maximalen Strukturtiefe von 100 µm oder weniger und einer maximalen Strukturbreite von 100 µm oder weniger aufweisen,
**dadurch gekennzeichnet, dass**
die erste Kalibrierstruktur (3) und die zweite Kalibrierstruktur (3) durch ein additives Fertigungsverfahren, nämlich mittels 3D-Druck, auf dem Trägersubstrat (2) hergestellt sind, und
die erste Kalibrierstruktur (3) und die zweite Kalibrierstruktur (3) eine Oberflächenbeschichtung aus einem Metall aufweisen.

2. Kalibriernormal (1) nach einem der vorhergehenden Ansprüche, **dadurch gekennzeichnet, dass** die erste Kalibrierstruktur (3) und die zweite Kalibrierstruktur (3) durch Einphotonenpolymerisation mittels Graustufenlithographie oder durch Mehrphotonenpolymerisation mittels direktem Laserschreiben hergestellt sind.

3. Kalibriernormal (1) nach einem der vorhergehenden Ansprüche, **dadurch gekennzeichnet, dass** die erste Kalibrierstruktur (3) und die zweite Kalibrierstruktur (3) räumlich voneinander beabstandet auf dem Trägersubstrat (2) angeordnet sind.

4. Kalibriernormal (1) nach einem der vorhergehenden Ansprüche, **dadurch gekennzeichnet, dass** die erste Kalibierstruktur und die zweite Kalibrierstruktur (3) Teil eines ersten Satzes von Kalibierstrukturen bilden, wobei alle zu erfassende Flächen der Kalibrierstrukturen (3) des ersten Satzes von Kalibrierstrukturen (3) jeweils eine erste maximale charakteristische Abmessung aufweisen und wobei auf dem Trägersubstrat (2) ein zweiter Satz von Kalibrierstrukturen (3) mit einer Mehrzahl von Kalibrierstrukturen (3) angeordnet ist, wobei alle zu erfassenden Flächen der Kalibrierstrukturen (3) des zweiten Satzes von Kalibrierstrukturen (3) eine zweite maximale charakteristische Abmessung aufweisen, wobei die erste charakteristische Abmessung und die zweite charakteristische Abmessung voneinander verschieden sind.

5. Kalibriernormal (1) nach Anspruch 4, **dadurch gekennzeichnet, dass** die Kalibrierstrukturen (3) quadratisch sind und die Kantenlängen als charakteristische Abmessungen der zu erfassenden Flächen der Kalibrierstrukturen (3) des ersten und zweiten Satzes von Kalibrierstrukturen (3) voneinander verschieden sind.

6. Kalibriernormal (1) nach einem der vorhergehenden Ansprüche, **dadurch gekennzeichnet, dass** das Trägersubstrat (2) aus Glas hergestellt ist.

7. Kalibriernormal (1) nach einem der vorhergehenden Ansprüche, **dadurch gekennzeichnet, dass** die erste Kalibrierstruktur (3) und die zweite Kalibrierstruktur (3) aus einem Photolack, vorzugsweise aus einem Acrylat-basierten Photolack, hergestellt sind.

8. Verfahren zur Herstellung eines Kalibriernormals (1) zum Kalibrieren eines Tastschnittmessgerätes oder eines optischen Messgerätes mit den Schritten Aufbringen einer ersten Kalibrierstruktur (3) mit einer Topographie (4) für die Kalibrierung einer ersten metrologischen Eigenschaft des Messgerätes auf ein Trägersubstrat (2) und Aufbringen mindestens einer zweiten Kalibrierstruktur (3) mit einer Topographie (4) für die Kalibrierung einer zweiten metrologischen Eigenschaft des Messgerätes auf das Trägersubstrat (2), wobei die erste Topographie (4) und die zweite Topographie (4) voneinander verschieden sind,
die zu erfassende Fläche der ersten Kalibrierstruktur (3) und die zu erfassende Fläche der zweiten Kalibrierstruktur (3) jeweils eine Fläche des Trägersubstrats (2) mit einer maximalen charakteristischen Abmessung von 800 µm oder weniger bedecken,
die erste Kalibrierstruktur (3) und die zweite Kalibrierstruktur (3) jeweils eine Topographie (4) mit einer maximalen Strukturtiefe von 100 µm oder weniger und einer maximalen Strukturbreite von 100 µm oder weniger aufweisen,
**dadurch gekennzeichnet, dass**
das Aufbringen der ersten und der zweiten Kalibrierstruktur (3) durch ein additives Fertigungsverfahren, nämlich mittels 3-D-Druck, auf dem Trägersubstrat (2) erfolgt, und
die erste Kalibrierstruktur (3) und die zweite Kalibrierstruktur (3) eine Oberflächenbeschichtung aus einem Metall aufweisen.

9. Verfahren nach Anspruch 8, **dadurch gekennzeichnet, dass** das Aufbringen der ersten und der zweiten Kalibrierstruktur (3) durch Einphotonenpolymerisation mittels Graustufenlithographie oder durch Mehrphotonenpolymerisation mittels direktem Laserschreiben erfolgt.

10. Verfahren nach einem der Ansprüche 8 oder 9, **dadurch gekennzeichnet, dass** das Aufbringen der ersten und der zweiten Kalibrierstruktur (3) mit jeweils einer rechteckigen Fläche und einer Kantenlänge von 800 µm oder weniger auf dem Trägersubstrat (2), sowie mit jeweils einer Topographie (4) mit einer Strukturtiefe von 100 µm oder weniger und eine Strukturbreite von 100 µm oder weniger erfolgt.

## Claims

1. Calibration standard (1) for calibrating a stylus measuring instrument or an optical measuring instrument, comprising a carrier substrate (2) and a first calibration structure (3) applied to the carrier substrate (2), wherein the first calibration structure (3) has a first topography (4) which is designed and disposed on the carrier substrate (2) in such a way that it enables a calibration of a first metrological property of the measuring instrument,
wherein the calibration standard (1) further comprises at least one second calibration structure (3) applied to the carrier substrate (2), wherein the second calibration structure (3) comprises a second topography (4) which is designed and disposed on the carrier substrate (2) in such a way that it enables a calibration of a second metrological property of the measuring instrument, wherein the first topography (4) and the second topography (4) are different from one another,
wherein the surface to be acquired of the first calibration structure (3) and the surface to be acquired of the second calibration structure (3) each cover a surface of the carrier substrate (2) having a maximum characteristic dimension of 800 µm or less, wherein the first calibration structure (3) and the second calibration structure (3) each have a topography (4) having a maximum structure depth of 100 µm or less and a maximum structure width of 100 µm or less,
**characterised in that**
the first calibration structure (3) and the second calibration structure (3) are produced on the carrier substrate (2) by means of an additive manufacturing process, namely using 3D printing, and
the first calibration structure (3) and the second calibration structure (3) comprise a surface coating made of a metal.

2. Calibration standard (1) according to any one of the preceding claims, **characterised in that** the first calibration structure (3) and the second calibration structure (3) are produced by means of single-photon polymerisation using grayscale lithography or by means of multi-photon polymerisation using direct laser writing.

3. Calibration standard (1) according to any one of the preceding claims, **characterised in that** the first calibration structure (3) and the second calibration structure (3) are disposed spatially spaced apart from one another on the carrier substrate (2).

4. Calibration standard (1) according to any one of the preceding claims, **characterised in that** the first calibration structure and the second calibration structure (3) form part of a first set of calibration structures, wherein all of the surfaces to be acquired of the calibration structures (3) of the first set of calibration structures (3) have a first maximum characteristic dimension and wherein a second set of calibration structures (3) comprising a plurality of calibration structures (3) is disposed on the carrier substrate (2), wherein all of the surfaces to be acquired of the calibration structures (3) of the second set of calibration structures (3) have a second maximum characteristic dimension, wherein the first characteristic dimension and the second characteristic dimension are different from one another.

5. Calibration standard (1) according to Claim 4, **characterised in that** the calibration structures (3) are square and the edge lengths are different from one another as characteristic dimensions of the surfaces to be acquired of the calibration structures (3) of the first and second set of calibration structures (3).

6. Calibration standard (1) according to any one of the preceding claims, **characterised in that** the carrier substrate (2) is made of glass.

7. Calibration standard (1) according to any one of the preceding claims, **characterised in that** the first calibration structure (3) and the second calibration structure (3) are made of a photoresist, preferably an acrylate-based photoresist.

8. Method for producing a calibration standard (1) for calibrating a stylus measuring instrument or an optical measuring instrument comprising the steps of applying a first calibration structure (3) having a topography (4) for calibration of a first metrological property of the measuring instrument to a carrier substrate (2) and applying at least one second calibration structure (3) having a topography (4) for calibration of a second metrological property of the measuring instrument to the carrier substrate (2), wherein the first topography (4) and the second topography (4) are different from one another, the surface to be acquired of the first calibration structure (3) and the surface to be acquired of the second calibration structure (3) each cover a surface of the carrier substrate (2) having a maximum characteristic dimension of 800 µm or less, the first calibration structure (3) and the second calibration structure (3) each have a topography (4) having a maximum structure depth of 100 µm or less and a maximum structure width of 100 µm or less,
**characterised in that**
the first and the second calibration structure (3) are applied to the carrier substrate (2) by means of an additive manufacturing process, namely using 3D printing, and
the first calibration structure (3) and the second calibration structure (3) comprise a surface coating made of a metal.

9. Method according to Claim 8, **characterised in that** the first and the second calibration structure (3) are applied by means of single-photon polymerisation using grayscale lithography or by means of multi-photon polymerisation using direct laser writing.

10. Method according to any one of Claims 8 or 9, **characterised in that** the first and the second calibration structure (3) are applied to the carrier substrate (2) with a respective rectangular surface and an edge length of 800 µm or less and a respective topography (4) having a structure depth of 100 µm or less and a structure width of 100 µm or less.

## Revendications

1. Référence d'étalonnage (1) permettant d'étalonner un profilomètre ou un appareil de mesure optique comprenant
un substrat de support (2) et
une première structure d'étalonnage (3) appliquée sur le substrat de support (2), la première structure d'étalonnage (3) présentant une première topographie (4) conçue et agencée sur le substrat de support (2) de telle manière qu'elle permette un étalonnage d'une première propriété métrologique de l'appareil de mesure,
la référence d'étalonnage (1) présentant en outre au moins une seconde structure d'étalonnage (3) appliquée sur le substrat de support (2), la seconde structure d'étalonnage (3) présentant une seconde topographie (4) conçue et agencée sur le substrat de support (2) de telle manière qu'elle permette un étalonnage d'une seconde propriété métrologique de l'appareil de mesure, la première topographie (4) et la seconde topographie (4) étant différentes l'une de l'autre,
la surface à inspecter de la première structure d'étalonnage (3) et la surface à inspecter de la seconde structure d'étalonnage (3) couvrant respectivement une surface du substrat de support (2) présentant une dimension caractéristique maximale inférieure ou égale à 800 µm, la première structure d'étalonnage (3) et la seconde structure d'étalonnage (3) présentant respectivement une topographie (4) présentant une profondeur de structure maximale inférieure ou égale à 100 µm et une largeur de structure maximale inférieure ou égale à 100 µm,
**caractérisée en ce que**
la première structure d'étalonnage (3) et la seconde structure d'étalonnage (3) sont produites sur le substrat de support (2) grâce à un procédé de production additive, c'est-à-dire au moyen d'une impression 3D, et
la première structure d'étalonnage (3) et la seconde structure d'étalonnage (3) présentent un revêtement de surface en métal.

2. Référence d'étalonnage (1) selon l'une quelconque des revendications précédentes, **caractérisée en ce que**
la première structure d'étalonnage (3) et la seconde structure d'étalonnage (3) sont produites par polymérisation monophotonique au moyen d'une lithographie à niveaux de gris ou par polymérisation multiphotonique au moyen d'une gravure directe par laser.

3. Référence d'étalonnage (1) selon l'une quelconque des revendications précédentes, **caractérisée en ce que**
la première structure d'étalonnage (3) et la seconde structure d'étalonnage (3) sont agencées sur le substrat de support (2) à une certaine distance l'une de l'autre.

4. Référence d'étalonnage (1) selon l'une quelconque des revendications précédentes, **caractérisée en ce que**
la première structure d'étalonnage et la seconde structure d'étalonnage (3) font partie d'un premier ensemble de structures d'étalonnage, toutes les surfaces à inspecter des structures d'étalonnage (3) du premier ensemble de structures d'étalonnage (3) présentant, chacune, une première dimension caractéristique maximale, et un second ensemble de structures d'étalonnage (3) avec une pluralité de structures d'étalonnage (3) étant agencé sur le substrat de support (2), toutes les surfaces à inspecter des structures d'étalonnage (3) du second ensemble de structures d'étalonnage (3) présentant une seconde dimension caractéristique maximale, la première dimension caractéristique et la seconde dimension caractéristique étant différentes l'une de l'autre.

5. Référence d'étalonnage (1) selon la revendication 4, **caractérisée en ce que** les structures d'étalonnage (3) sont carrées et les longueurs de bord, faisant office de dimensions caractéristiques, des surfaces à inspecter des structures d'étalonnage (3) des premier et second ensembles de structures d'étalonnage (3) sont différentes les unes des autres.

6. Référence d'étalonnage (1) selon l'une quelconque des revendications précédentes, **caractérisée en ce que** le substrat de support (2) est produit à partir de verre.

7. Référence d'étalonnage (1) selon l'une quelconque des revendications précédentes, **caractérisée en ce que**
la première structure d'étalonnage (3) et la seconde structure d'étalonnage (3) sont produites à partir d'une laque photosensible, de manière préférée une laque photosensible à base d'acrylate.

8. Procédé de production d'une référence d'étalonnage (1) permettant d'étalonner un profilomètre ou un appareil de mesure optique, comprenant les étapes consistant à
appliquer sur un substrat de support (2) une première structure d'étalonnage (3) présentant une topographie (4) destinée à l'étalonnage d'une première propriété métrologique de l'appareil de mesure et
appliquer sur le substrat de support (2) au moins une seconde structure d'étalonnage (3) présentant une topographie (4) destinée à l'étalonnage d'une seconde propriété métrologique de l'appareil de mesure, la première topographie (4) et la seconde topographie (4) étant différentes l'une de l'autre,
la surface à inspecter de la première structure d'étalonnage (3) et la surface à inspecter de la seconde structure d'étalonnage (3) couvrant, chacune, une surface du substrat de support (2) présentant une dimension caractéristique maximale inférieure ou égale à 800 µm,
la première structure d'étalonnage (3) et la seconde structure d'étalonnage (3) présentant, chacune, une topographie (4) présentant une profondeur de structure maximale inférieure ou égale à 100 µm et une largeur de structure maximale inférieure ou égale à 100 µm,
**caractérisé en ce que**
l'application des première et seconde structures d'étalonnage (3) sur le substrat de support (2) intervient grâce à un procédé de production additive, c'est-à-dire au moyen d'une impression 3D, et
la première structure d'étalonnage (3) et la seconde structure d'étalonnage (3) présentent un revêtement de surface en métal.

9. Procédé selon la revendication 8, **caractérisé en ce que** l'application des première et seconde structures d'étalonnage (3) intervient par polymérisation monophotonique au moyen d'une lithographie à niveaux de gris ou par polymérisation multiphotonique au moyen d'une écriture directe par laser.

10. Procédé selon la revendication 8 ou 9, **caractérisé en ce que** les première et seconde structures d'étalonnage (3) sur le substrat de support (2) sont appliquées respectivement avec une surface rectangulaire et une longueur de bord inférieure ou égale à 800 µm, et avec une topographie (4) présentant une profondeur de structure inférieure ou égale à 100 µm et une largeur de structure inférieure ou égale à 100 µm.
